# EUROPEAN PATENT APPLICATION

(11) **EP 4 576 589 A1**
(43) Date of publication of application: **25.06.2025**
(21) Application number: 24222222.2
(22) Date of filing: 20.12.2024
(51) Int. Cl.: H04B 1/38, H01Q 1/34, H04B 7/15, H04B 7/26, H04B 7/155

(54) **WIRELESS COMMUNICATION SYSTEM AND WIRELESS COMMUNICATION METHOD FOR WIRELESS COMMUNICATION IN ENVIRONMENT WITH COMMUNICATION SHADOW ZONE**

(30) Priority: 21.12.2023 KR 20230188642
(71) Applicant: ZN Technologies Co., Ltd., Busan 46744 (KR)
(72) Inventor: PARK, Chulgyun, Seoul 06601 (KR); KANG, Changsoo, Yongin-si, Gyeonggi-do 17012 (KR); LEE, Hyunil, Seongnam-si, Gyeonggi-do 13555 (KR)
(74) Representative: Modiano, Gabriella Diana

(57) **Abstract**

A wireless communication system and a wireless communication method for wireless communication in an environment with communication shadow zone are provided. The wireless communication system includes a first communication relay device configured to wirelessly communicate with a first radio device through a first communication channel and a second communication relay device configured to wirelessly communicate with a second radio device through a second communication channel that is different from the first communication channel. The first communication relay device and the second communication relay device perform communication between each other using a metal body as a communication medium and broadcast a pilot signal including communication channel information.

## Description

### CROSS-REFERENCE TO RELATED APPLICATION

This application claims the benefit of Korean Patent Application No. 10-2023-0188642 filed on December 21, 2023, in the Korean Intellectual Property Office, the entire disclosure of which is incorporated herein by reference for all purposes.

### BACKGROUND

### 1. Field of the Invention

One or more embodiments relate to a wireless communication system and a wireless communication method for wireless communication in an environment with communication shadow zone.

### 2. Description of the Related Art

Conventional communication antennas tend to exhibit deteriorated resonance and radiation characteristics when placed on or in contact with a metal surface such as iron. Therefore, there is a technical difficulty in establishing communication between an internally placed antenna and an externally placed antenna in an environment with communication shadow zone, such as an environment shielded by metal (e.g., a container box or a ship). Therefore, new research is needed on a device and method that may overcome a metal-shielded environment to propagate electromagnetic waves and perform data communication.

### SUMMARY

According to an aspect, there is provided a wireless communication method including receiving, by a first communication relay device, voice data from a first radio device through a first communication channel, transmitting, by the first communication relay device, the voice data to a second communication relay device, using a metal body as a communication medium, broadcasting, by the first communication relay device, a first pilot signal comprising communication channel information regarding the first communication channel, receiving, by the second communication relay device, the voice data from the first communication relay device, using a metal body as a communication medium, transmitting, by the second communication relay device, the voice data to a second radio device through a second communication channel, and broadcasting, by the second communication relay device, a second pilot signal comprising communication channel information regarding the second communication channel.

The broadcasting of the first pilot signal may include periodically broadcasting the first pilot signal during a standby state time of the first communication relay device.

The broadcasting of the second pilot signal may include periodically broadcasting the second pilot signal during a standby state time of the second communication relay device.

Each of the first communication relay device and the second communication relay device may be configured to broadcast a pilot signal of a preset signal strength.

The first communication relay device may be configured to broadcast the first pilot signal having a lower signal strength than a signal strength of a signal transmitted or received during a communication process with the first radio device.

The second communication relay device may be configured to broadcast the second pilot signal having a lower signal strength than a signal strength of a signal transmitted or received during a communication process with the second radio device.

The first communication relay device and the second communication relay device are disposed in a ship.

The first radio device may be configured to switch, when receiving the second pilot signal, a current communication channel, through which communication is to take place, to the second communication channel, based on the communication channel information on the second communication channel included in the received second pilot signal.

The second radio device may be configured to switch, when receiving the first pilot signal, a current communication channel to the first communication channel, based on the communication channel information on the first communication channel included in the received first pilot signal.

A non-transitory computer-readable storage medium may store instructions that, when executed by a processor, cause the processor to perform the method.

According to an aspect, there is provided a wireless communication system including a first communication relay device configured to wirelessly communicate with a first radio device through a first communication channel and a second communication relay device configured to wirelessly communicate with a second radio device through a second communication channel that is different from the first communication channel, wherein the first communication relay device and the second communication relay device are configured to perform communication between each other using a metal body as a communication medium and broadcast a pilot signal comprising communication channel information.

Additional aspects of embodiments will be set forth in part in the description which follows and, in part, will be apparent from the description, or may be learned by practice of the disclosure.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a diagram schematically illustrating a principle of data transmission through a metal medium, according to an embodiment;
FIG. 2 is a diagram illustrating an antenna portion and a data processing portion included in a communication relay device, according to an embodiment;
FIG. 3 is a diagram illustrating a wireless communication system according to an embodiment;
FIG. 4 is a flowchart illustrating operations of a wireless communication method, according to an embodiment; and
FIG. 5 is a block diagram illustrating components of a communication relay device, according to an embodiment.

### DETAILED DESCRIPTION

The following structural or functional description of examples is provided as an example only and various alterations and modifications may be made to the examples. Thus, an actual form of implementation is not construed as limited to the examples described herein and should be understood to include all changes, equivalents, and replacements within the idea and the technical scope of the disclosure.

Although terms such as first, second, and the like are used to describe various components, the components are not limited to the terms. These terms should be used only to distinguish one component from another component. For example, a "first" component may be referred to as a "second" component, and similarly, the "second" component may also be referred to as the "first" component.

It should be noted that when one component is described as being "connected," "coupled," or "joined" to another component, the first component may be directly connected, coupled, or joined to the second component, or a third component may be "connected," "coupled," or "joined" between the first and second components.

The singular forms "a," "an," and "the" are intended to include the plural forms as well, unless the context clearly indicates otherwise. As used herein, each of "A or B," "at least one of A and B," "at least one of A or B," "A, B, or C," "at least one of A, B, and C," "at least one of A, B, or C," "one or a combination or two or more of A, B, and C," and the like may include any one of the items listed together in the corresponding one of the phrases, or all possible combinations thereof. It will be further understood that the terms "comprises/comprising" and/or "includes/including," when used herein, specify the presence of stated features, integers, steps, operations, elements, and/or components, but do not preclude the presence or addition of one or more other features, integers, steps, operations, elements, components and/or groups thereof.

Unless otherwise defined, all terms used herein including technical and scientific terms have the same meanings as those commonly understood by one of ordinary skill in the art to which this disclosure pertains. Terms such as those defined in commonly used dictionaries are to be interpreted as having a meaning that is consistent with their meaning in the context of the relevant art and are not to be interpreted in an idealized or overly formal sense unless expressly so defined herein.

As used in connection with the present disclosure, the term "module" may include a unit implemented in hardware, software, or firmware, and may interchangeably be used with other terms, for example, "logic," "logic block," "part," or "circuitry." A module may be a single integral component or a minimum unit or part thereof, adapted to perform one or more functions. For example, according to an embodiment, the module may be implemented in a form of an application-specific integrated circuit (ASIC).

The term "unit" used herein may refer to a software or hardware component, such as a field-programmable gate array (FPGA) or an ASIC, and the "unit" performs predefined functions. However, "unit" is not limited to software or hardware. The "unit" may be configured to reside on an addressable storage medium or configured to operate one or more processors. Accordingly, the "unit" may include, for example, components, such as software components, object-oriented software components, class components, and task components, processes, functions, attributes, procedures, sub-routines, segments of program code, drivers, firmware, microcode, circuitry, data, databases, data structures, tables, arrays, and variables. The functionalities provided in the components and "units" may be combined into fewer components and "units" or may be further separated into additional components and "units." Furthermore, the components and "units" may be implemented to operate on one or more central processing units (CPUs) within a device or a security multimedia card. In addition, "unit" may include one or more processors.

Hereinafter, the examples are described in detail with reference to the accompanying drawings. When describing the examples with reference to the accompanying drawings, like reference numerals refer to like components and a repeated description related thereto is omitted.

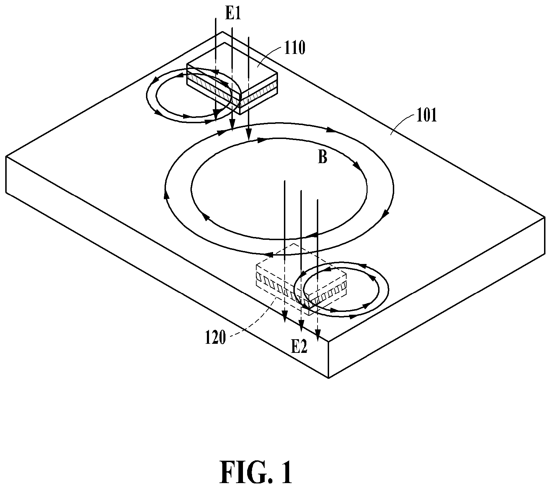

FIG. 1 is a diagram schematically illustrating a principle of data transmission through a metal medium, according to an embodiment.

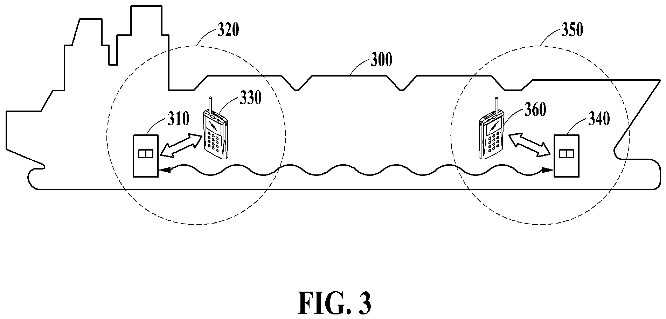

A communication relay device according to an embodiment (e.g., a first communication relay deice 310 and a second communication relay deice 340 of FIG. 3) may perform communication using a metal body as a medium. The communication relay deice may receive voice data from a radio device and transmit the received voice data to another communication relay deice, using a metal body as a medium. The communication relay deice may effectively perform wireless communication using a metal body as a medium in the environment with communication shadow zone in which communication using radio waves is difficult due to the metal body, such as a ship, a container, a trailer, and the like. The communication relay deice may include an antenna portion that is attached to a metal hull of a ship, forms an electromagnetic field in the metal hull, and propagates, through the metal body, voice data received from a data processing portion (e.g., a processor) by loading the voice data into the electromagnetic field. The antenna portion of the communication relay deice may receive voice data transmitted to the electromagnetic field through the metal body, and the communication relay deice may transmit the received voice data to a radio device through a communication channel of the communication relay deice.

Hereinafter, a principle by which voice data may be transmitted through a metal body is described with reference to FIG. 1. FIG. 1 is a diagram schematically illustrating a principle of transmitting voice data through a metal body (e.g., a metal hull), according to an embodiment. In the illustrated example, a metal medium 101 may be, for example, a steel plate or a frame structure of the hull. A case in which the metal medium 101 is a magnetic material and a case in which the metal medium 101 is a diamagnetic material are described below.

### When the metal medium 101 is a magnetic material

Conductive layers of a first antenna 110 may form an electromagnetic field in a dielectric layer. Thereafter, by the electromagnetic field, an electromagnetic field in which a magnetic field is dominant may be formed in the metal medium 101, which may be a radio wave medium. From the generated electromagnetic field, the electric field E1 may propagate in a perpendicular direction to the metal medium 101 through an aperture of the first antenna 110. The propagated electric field E1 may form an electromagnetic field B, in which a magnetic field is dominant, within the metal medium 101.

Thereafter, according to the theory of reversibility, a second antenna 120 on a receiving side may receive energy from the electromagnetic field formed within the metal medium 101, with a similar structure and principle. In this process, a change in the electromagnetic field B, in which a magnetic field is dominant, may be transmitted through an aperture of the second antenna 120 to the electromagnetic field E2, in which an electric field is dominant, in the dielectric layer.

In communication using a metal body as a medium (also referred to as through-metal communication), since the magnetic field is dominant, a change in impedance may be small even when a shape and a size of the metal medium 101 changes. In addition, the metal medium 101 has a higher magnetic permeability than air and thus may have a better radio wave transmission efficiency than a communication system that propagates radio waves through air. Thus, a communication distance of magnetic field communication through the metal medium 101 made of a magnetic material may be greater than that of magnetic field communication through air. In order to form an electromagnetic field in which a magnetic field is dominant, a resonant portion and a circuit portion of the communication relay deice may need to be designed so that an electric field of a determined size may be formed inside the metal body in the resonant portion and the circuit portion.

By the electromagnetic field formed in the metal medium 101, energy transfer may be possible even to a resonator located a determined distance away from the metal medium 101. Since a magnetic field is dominant in the electromagnetic field formed in the metal medium 101, an electric field may be radiated from the metal medium 101. Thus, when an antenna resonating at an operating frequency is within a determined distance from the metal medium 101, energy may be received.

A dielectric of the dielectric layer of the first antenna 110 or the second antenna 120 may reduce a thickness and a size of the resonant portion and form the electromagnetic field B, in which a magnetic field is dominant, within the metal medium 101 so that sufficient energy may be transmitted.

### When the metal medium 101 is a paramagnetic material or a diamagnetic material

A current supplied to a conductive layer side may form an electromagnetic field E2, in which an electric field is dominant, within the metal medium 101. Here, the electric field radiated from an aperture may not form the electromagnetic field B, in which a magnetic field is dominant, within the metal medium 101. This is because a paramagnetic material and a diamagnetic material have a similar magnetic permeability to air. Thus, in the case of the metal medium 101 made of a paramagnetic material or a diamagnetic material, the propagation of the magnetic field may not be stronger in the air like it is in the case of a ferromagnetic material, but may propagate with a similar size. In other words, the distances of the propagation through air and inside the metal body are similar.

Pure iron, which is a ferromagnetic material, has a magnetic permeability of 4,000 to 5,000, but aluminum, which is a paramagnetic material, and silver (Ag), which is a diamagnetic material, have a magnetic permeability of about 1.0, so a strength of magnetic field propagation inside the metal body may vary. Thus, in this case, a signal may propagate to a receiver by a current induced in the metal medium 101 from the layer, among the conductive layers of the antenna 110, that is in contact with the metal medium 101. Here, the electric field radiated from the aperture may be induced in the metal body, and through this, a signal or power may be transmitted.

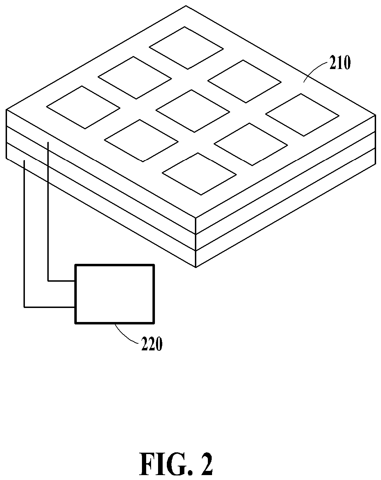

FIG. 2 is a diagram illustrating an antenna portion and a data processing portion included in a communication relay device, according to an embodiment.

FIG. 2 illustrates an antenna portion 210 and a data processing portion 220, according to an embodiment. The antenna portion 210 may include a first layer of a conductive material that includes an aperture and faces a metal medium in the illustrated example, a second layer of a conductive material disposed on an opposite surface of the first layer, and a third layer of a dielectric material included between the first layer and the second layer. A number of apertures may vary depending on an application and a communication environment. The first layer and the second layer may have one or more openings, but in some cases may not have any openings. A shape of the aperture may be circular or polygonal, and a size of the aperture may be determined so that sufficient energy may be transferred by forming an electromagnetic field in which a magnetic field is dominant within the metal medium.

A thickness of each layer may be determined by considering a wavelength and a skin depth so that sufficient energy may be transferred by forming an electromagnetic field in which a magnetic field is dominant within the metal medium. Other layer(s) with different electrical characteristics may be added to the first layer or the second layer in an opposite direction to the third layer. For example, another dielectric layer may be added on top of the first layer to induce a formation of a strong electromagnetic field. In another example, an insulator may be added on top of the first layer to prevent an electrical connection with the metal medium.

The third layer, which is an intermediate layer between the first layer and the second layer, may consist of a dielectric or an insulator. The third layer may include but is not limited to, for example, at least one material of carbon fiber, acrylic, or polycarbonate. However, the third layer may also include other materials such as paint, paper, a polymer resin film, and the like. In addition, the third layer may include multiple layers having different characteristics, a plurality of dielectrics, or a plurality of insulators.

In addition, a ferromagnetic material may be attached to the metal medium 101 in advance to induce a strong magnetic field in a metal body. For example, a dielectric or an insulator may be attached on the first layer and a ferromagnetic material may be attached on the dielectric or the insulator. This may then be placed on the metal medium 101. Thereafter, the attached ferromagnetic material may form a strong magnetic field, and the magnetic field may be induced in the metal medium 101, thereby forming a stronger magnetic field than in a case of directly inducing a magnetic field within the metal body.

The data processing portion 220 may be a circuit device that converts data and/or signals transmitted and received by the antenna portion 210, which is a resonant portion, into meaningful data and/or signals. The data processing portion 220 may include a transmission circuit and a reception circuit and may include a circuit configuration for processing (or converting) data and/or signals.

FIG. 3 is a diagram illustrating a wireless communication system according to an embodiment.

Referring to FIG. 3, a wireless communication system may be a wireless communication system for performing communication between radio devices (e.g., a first radio device 330 and a second radio device 360) in a ship 300. However, the scope of the embodiment is not limited thereto, and the proposed wireless communication system may also be used in other communication shadow environments. For example, when there is a metal medium other than a metal hull of the ship 300 and through-metal communication between communication relay devices (e.g., the first communication relay deice 310 and the second communication relay deice 340) is possible through the metal medium, the description herein may apply. In this specification, the term "radio device" may be replaced with "radio."

The wireless communication system may include the first communication relay device 310 that wirelessly communicates with the first radio device 330 through a first communication channel and a second communication relay device 340 that wirelessly communicates with the second radio device 360 through a second communication channel that is different from the first communication channel. The first communication relay device 310 and the second communication relay device 340 may be disposed in the ship 300. The first communication relay device 310 and the second communication relay device 340 may perform communication between each other using a metal body as a communication medium. For example, the first communication relay device 310 and the second communication relay device 340 may communicate with each other using the metal hull of the ship 300 as a metal medium according to the communication principle described with reference to FIG. 1. The first communication relay device 310 may be located at a stern of the ship 300, and the second communication relay device 340 may be located at a front of the ship 300.

The first communication relay device 310 may form an electromagnetic field in the metal hull of the ship 300 through a first antenna attached to the metal hull and propagate voice data received from the first radio device 330 by loading the voice data into the electromagnetic field in a form of a signal. The second communication relay device 340 may receive the signal transmitted through the electromagnetic field via a second antenna attached to the metal hull of the ship 300 and extract the voice data from the received signal. The second communication relay device 340 may transmit the extracted voice data through the second communication channel, and the second radio device 360 may receive the voice data generated by the first radio device 330 through the second communication channel.

The second communication relay device 340 may form an electromagnetic field in the metal hull of the ship 300 through the second antenna attached to the metal hull and propagate voice data received from the second radio device 360 by loading the voice data into the electromagnetic field in a form of a signal. The first communication relay device 310 may receive the signal transmitted through the electromagnetic field via the first antenna attached to the metal hull of the ship 300 and extract the voice data from the received signal. The first communication relay device 310 may transmit the extracted voice data through the first communication channel, and the first radio device 330 may receive the voice data generated by the second radio device 360 through the first communication channel.

The first communication relay device 310 and the second communication relay device 340 may broadcast (or transmit) a pilot signal including communication channel information of the communication channels. For example, the first communication relay device 310 may broadcast a first pilot signal including communication channel information regarding the first communication channel. The second communication relay device 340 may broadcast a second pilot signal including communication channel information regarding the second communication channel. For example, the first communication relay device 310 and the second communication relay device 340 may each periodically broadcast a pilot signal during a standby state time. Here, the standby state time may refer to a time during which one communication relay device is not communicating with a radio device and another communication relay device (or a time during which the one communication relay device is not processing wireless transmission and reception).

Each of the first communication relay device 310 and the second communication relay device 340 may broadcast a pilot signal of a preset signal strength. For example, the first communication relay device 310 may broadcast a pilot signal having a lower signal strength than a signal strength of a signal transmitted or received during a communication process with the first radio device 330, and the second communication relay device 340 may broadcast a pilot signal having a lower signal strength than a signal strength of a signal transmitted or received during a communication process with the second radio device 360. The pilot signal may be a signal having a weak signal strength that is transmitted spot-wise at a specific point in time or time interval. The pilot signal may be used as a signal to inform a radio device receiving the pilot signal of an available communication channel at a location in which the radio device is located.

The first radio device 330 may, while communicating with the first communication relay device 310, move out of a communication range 320 of the first communication relay device 310 and move into a communication range 350 of the second communication relay device 340. In this case, the first radio device 330 may receive the second pilot signal transmitted from the second communication relay device 340. When the first radio device 330 receives the second pilot signal transmitted from the second communication relay device 340, the first radio device 330 may switch a current communication channel, through which communication is to take place, to the second communication channel, based on communication channel information on the second communication channel included in the received second pilot signal. This switch of the communication channels may be performed automatically. Alternatively, the first radio device 330 may provide a notice to a user of the first radio device 330 notifying that the second communication channel has been detected or requesting a switch to the second communication channel.

The second radio device 360 may, while communicating with the second communication relay device 340, move out of the communication range 350 of the second communication relay device 340 and move into the communication range 320 of the first communication relay device 310. In this case, the second radio device 360 may receive the first pilot signal transmitted from the first communication relay device 310. When the second radio device 360 receives the first pilot signal transmitted from the first communication relay device 310, the second radio device 360 may switch a current communication channel, through which communication is to take place, to the first communication channel, based on communication channel information on the first communication channel included in the received first pilot signal. This switch of the communication channels may be performed automatically. Alternatively, the second radio device 360 may provide a notice to a user of the second radio device 360 notifying that the first communication channel has been detected or requesting a switch to the first communication channel.

The communication range 320, which is a range within which communication with the first communication relay deice 310 is possible, and the communication range 350, which is a range within which communication with the second communication relay deice 340 is possible, may or may not overlap with each other. In addition, depending on the embodiment, there may be three or more communication relay deices.

When a particular radio device receives both the first pilot signal and the second pilot signal, the radio device may set the communication channel to a communication channel with a better communication environment (or communication quality). For example, when a received signal strength indicator (RSSI) at a time of receiving the first pilot signal is greater than an RSSI at the time of receiving the second pilot signal, the radio device may estimate that the communication environment is better in the first communication channel through which the first pilot signal is transmitted than in the second communication channel through which the second pilot signal is transmitted and may set the communication channel to the first communication channel.

The first radio device 330 and the second radio device 360 may perform channel scanning on a communication channel for communication. For example, the first radio device 330 and the second radio device 360 may search for a communication channel through which communication is possible by switching communication channels in an order of the first communication channel, the second communication channel, a third communication channel, and so on. In addition, the first radio device 330 and the second radio device 360 may attempt to communicate through a communication channel through which voice data (or a signal) was transmitted or a last activated communication channel. In a case of existing communication systems, when a radio device moves to a communication area in which communication is performed through the second communication channel while not communicating in a state in which a communication channel is set to the first communication channel, the radio device may initially attempt to communicate through the first communication channel and may thus fail to communicate. In addition, in the existing communication systems, an inconvenience may occur when, in order for a radio device to be linked to a communication relay device, a user has to manually switch a communication channel of the radio device to a communication channel through which communication may be performed. In addition, when the user fails to switch the communication channel appropriately, a situation may arise in which the radio device is not linked to the communication relay device and accordingly, communication is not performed.

However, as proposed in the present disclosure, when each of the first communication relay device 310 and the second communication relay device 340 continuously transmits a pilot signal to indicate a communication channel thereof, the radio device may effectively identify a communication channel through which communication is possible at a location in which the radio device is located. The radio device may reduce a possibility of communication failure due to incorrect setting of the communication channel by automatically switching a currently set communication channel to a communication channel identified through a pilot signal. Radio devices may automatically set and operate a communication channel by automatically finding, through a pilot signal, an optimal communication channel through which communication may be performed, regardless of a location of the radio devices. In addition, the radio devices may need to set the communication channel to a communication channel that may receive a better signal, and by setting output power of the pilot signal transmitted from the first and second communication relay devices 310 and 340 low, discrimination power of a signal that the first and second radio devices 330 and 360 may receive may be maximized, and the first and second radio devices 330 and 360 may thus set the optimal communication channel.

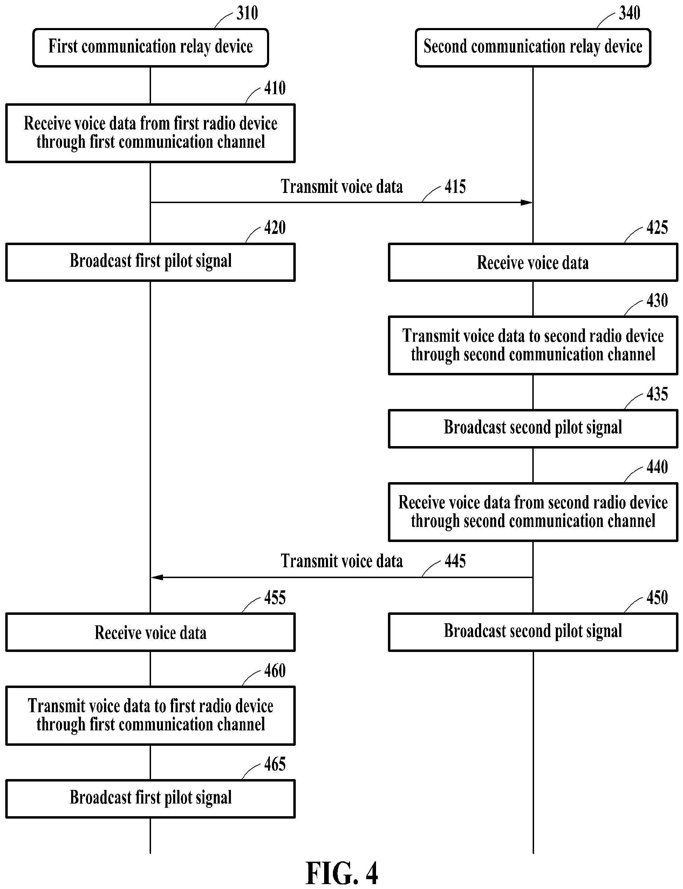

FIG. 4 is a flowchart illustrating operations of a wireless communication method, according to an embodiment.

Referring to FIG. 4, in operation 410, the first communication relay device 310 may receive voice data from a first radio device (e.g., the first radio device 330 of FIG. 3) through a first communication channel.

In operation 415, the first communication relay device 310 may transmit the voice data to the second communication relay device 340, using a metal body as a communication medium. The voice data may be transmitted by being carried by an electromagnetic field formed in a metal body.

In operation 420, the first communication relay device 310 may broadcast a first pilot signal including communication channel information regarding the first communication channel. The first communication relay device 310 may periodically broadcast the first pilot signal during a standby state time of the first communication relay device 310. The first communication relay device 310 may broadcast the first pilot signal having a lower signal strength than a signal strength of a signal transmitted or received during a communication process with the first radio device.

In operation 425, the second communication relay device 340 may receive the voice data from the first communication relay device 310, using a metal body as a communication medium.

In operation 430, the second communication relay device 340 may transmit the voice data to a second radio device (e.g., the second radio device 360 of FIG. 3) through a second communication channel.

In operation 435, the second communication relay device 340 may broadcast a second pilot signal including communication channel information regarding the second communication channel. The second communication relay device 340 may periodically broadcast the second pilot signal during a standby state time of the second communication relay device 340. The second communication relay device 340 may broadcast the second pilot signal having a lower signal strength than a signal strength of a signal transmitted or received during a communication process with the second radio device.

In operation 440, the second communication relay device 340 may receive voice data from the second radio device through the second communication channel.

In operation 445, the second communication relay device 340 may transmit the voice data to the first communication relay device 310, using a metal body as a communication medium. The voice data may be transmitted by being carried by an electromagnetic field formed in a metal body.

In operation 450, the second communication relay device 340 may broadcast the second pilot signal including the communication channel information regarding the second communication channel.

In operation 455, the first communication relay device 310 may receive the voice data from the second communication relay device 340, using a metal body as a communication medium.

In operation 460, the first communication relay device 310 may transmit the voice data to the first radio device through the first communication channel.

In operation 465, the first communication relay device 310 may broadcast the first pilot signal including the communication channel information regarding the first communication channel.

When the first radio device moves into a communication range of the second communication relay device 340 while communicating with the first communication relay device 310, the first radio device may receive the second pilot signal through the second communication channel. When receiving the second pilot signal, the first radio device may switch a current communication channel, through which communication is to take place, to the second communication channel, based on communication channel information on the second communication channel included in the received second pilot signal.

When the second radio device moves into a communication range of the first communication relay device 310 while communicating with the second communication relay device 340, the second radio device may receive the first pilot signal through the first communication channel. When receiving the first pilot signal, the second radio device may switch a current communication channel, through which communication is to take place, to the first communication channel, based on communication channel information on the first communication channel included in the received first pilot signal.

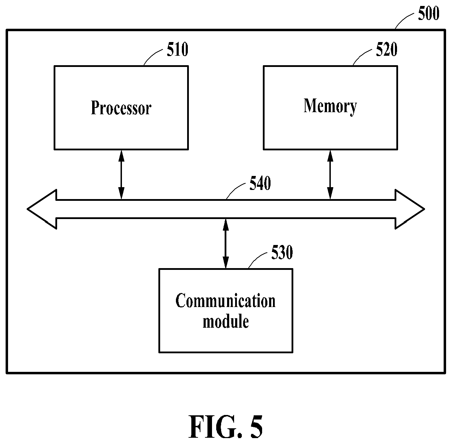

FIG. 5 is a block diagram illustrating components of a communication relay device, according to an embodiment.

Referring to FIG. 5, a communication relay device 500 may correspond to the communication relay devices described in the present disclosure (e.g., the first wireless relay device 310 and the second communication relay deice 340 of FIG. 3). The communication relay device 500 may include a processor 510, a memory 520, and a communication module 530, and each component of the communication relay device 500 may communicate with one another through a communication bus 540. Some of the components may be omitted from the communication relay device 500, or another component may be added to the communication relay device 500.

The processor 510 may control other components (e.g., a hardware or software component) of the communication relay device 500 and may perform various types of data processing or operations. In an embodiment, as at least part of data processing or operations, the processor 510 may store instructions or data received from another component in the memory 520, process the instructions or the data stored in the memory 520, and store result data in the memory 520.

The processor 510 may include a main processor (e.g., a CPU or an application processor (AP)) or an auxiliary processor (e.g., a graphics processing unit (GPU), a neural processing unit (NPU), an image signal processor (ISP), a sensor hub processor, or a communication processor (CP)) that is operable independently of or in conjunction with the main processor.

The memory 520 may store various pieces of data used by a component (e.g., the processor 510 or the communication module 530) of the communication relay device 500. The data may include, for example, a program (e.g., an application), input data and/or output data for instructions related thereto, and voice data received from a radio device. The memory 520 may store instructions executable by the processor 510. The memory 520 may include volatile memory or non-volatile memory. The processor 510 and the memory 520 may be included and operate in the data processing portion 220 of FIG. 2.

The communication module 530 may support establishing a direct (e.g., wired) communication channel or a wireless communication channel between the communication relay device 500 and another device (e.g., another communication relay device or a radio device) and performing communication through the established communication channel. The communication module 530 may include a communication circuit configured to perform a communication function. The communication module 530 may include a CP that operates independently of the processor 510 and supports direct (e.g., wired) or wireless communication. The communication module 530 may include a wireless communication module for performing wireless communication and/or a wired communication module. The communication module 530 may include, for example, the antenna portion 210 of FIG. 2.

The processor 510 may, by executing the instructions stored in the memory 520, control the communication relay device 500 so that the communication relay device 500 may perform one or more operations of the communication relay device described in the present disclosure.

The examples described herein may be implemented using hardware components, software components, and/or combinations thereof. A processing device may be implemented using one or more general-purpose or special-purpose computers, such as, for example, a processor, a controller, an arithmetic logic unit (ALU), a digital signal processor (DSP), a microcomputer, an FPGA, a programmable logic unit (PLU), a microprocessor or any other device capable of responding to and executing instructions in a defined manner. The processing device may run an operating system (OS) and one or more software applications that run on the OS. The processing device may also access, store, manipulate, process, and create data in response to execution of the software. For purpose of simplicity, the description of a processing device is used as singular. However, one of ordinary skill in the art will appreciate that a processing device may include multiple processing elements and/or multiple types of processing elements. For example, a processing device may include a plurality of processors, or a single processor and a single controller. In addition, a different processing configuration is possible, such as one including parallel processors.

The software may include a computer program, a piece of code, an instruction, or some combination thereof, to independently or collectively instruct or configure the processing device to operate as desired. The software and/or data may be permanently or temporarily embodied in any type of machine, component, physical or virtual equipment, computer storage medium or device, or in a propagated signal wave for the purpose of being interpreted by the processing device or providing instructions or data to the processing device. The software may also be distributed over network-coupled computer systems so that the software is stored and executed in a distributed fashion. The software and data may be stored in a non-transitory computer-readable recording medium.

The methods according to the above-described examples may be recorded in non-transitory computer-readable media including program instructions to implement various operations of the above-described examples. The media may also include the program instructions, data files, data structures, and the like alone or in combination. The program instructions recorded on the media may be those specially designed and constructed for the examples, or they may be of the kind well-known and available to those having skill in the computer software arts. Examples of non-transitory computer-readable media include magnetic media such as hard disks, floppy disks, and magnetic tape; optical media such as compact disc read-only memory (CD-ROM) and a digital versatile disc (DVD); magnetooptical media such as floptical disks; and hardware devices that are specially configured to store and perform program instructions, such as read-only memory (ROM), RAM, flash memory, and the like. Examples of program instructions include both machine code, such as those produced by a compiler, and files containing higher-level code that may be executed by the computer using an interpreter.

The above-described hardware devices may be configured to act as one or more software modules in order to perform the operations of the above-described embodiments, or vice versa.

Although the examples have been described with reference to the limited number of drawings, it will be apparent to one of ordinary skill in the art that various technical modifications and variations may be made in the examples without departing from the spirit and scope of the claims and their equivalents. For example, suitable results may be achieved if the described techniques are performed in a different order, and/or if components in a described system, architecture, device, or circuit are combined in a different manner and/or replaced or supplemented by other components or their equivalents.

Therefore, other implementations, other examples, and equivalents to the claims are also within the scope of the following claims.

## Claims

1. A wireless communication method comprising:
receiving, by a first communication relay device, voice data from a first radio device through a first communication channel;
transmitting, by the first communication relay device, the voice data to a second communication relay device, using a metal body as a communication medium;
broadcasting, by the first communication relay device, a first pilot signal comprising communication channel information regarding the first communication channel;
receiving, by the second communication relay device, the voice data from the first communication relay device, using a metal body as a communication medium;
transmitting, by the second communication relay device, the voice data to a second radio device through a second communication channel; and
broadcasting, by the second communication relay device, a second pilot signal comprising communication channel information regarding the second communication channel.

2. The wireless communication method of claim 1, wherein
the broadcasting of the first pilot signal comprises:
periodically broadcasting the first pilot signal during a standby state time of the first communication relay device, and
the broadcasting of the second pilot signal comprises:
periodically broadcasting the second pilot signal during a standby state time of the second communication relay device.

3. The wireless communication method of claim 1, wherein each of the first communication relay device and the second communication relay device is configured to:
broadcast a pilot signal of a preset signal strength.

4. The wireless communication method of claim 1, wherein
the first communication relay device is configured to:
broadcast the first pilot signal having a lower signal strength than a signal strength of a signal transmitted or received during a communication process with the first radio device, and
the second communication relay device is configured to:
broadcast the second pilot signal having a lower signal strength than a signal strength of a signal transmitted or received during a communication process with the second radio device.

5. The wireless communication method of claim 1, wherein
the first communication relay device and the second communication relay device are disposed in a ship.

6. The wireless communication method of claim 1, wherein the first radio device is configured to:
switch, when receiving the second pilot signal, a current communication channel, through which communication is to take place, to the second communication channel, based on the communication channel information on the second communication channel included in the received second pilot signal.

7. The wireless communication method of claim 1, wherein the second radio device is configured to:
switch, when receiving the first pilot signal, a current communication channel to the first communication channel, based on the communication channel information on the first communication channel included in the received first pilot signal.

8. A non-transitory computer-readable storage medium storing instructions that, when executed by a processor, cause the processor to perform the method of claim 1.

9. A wireless communication system comprising:
a first communication relay device configured to wirelessly communicate with a first radio device through a first communication channel; and
a second communication relay device configured to wirelessly communicate with a second radio device through a second communication channel that is different from the first communication channel,
wherein the first communication relay device and the second communication relay device are configured to:
perform communication between each other using a metal body as a communication medium; and
broadcast a pilot signal comprising communication channel information.

10. The wireless communication system of claim 9, wherein each of the first communication relay device and the second communication relay device is configured to:
periodically broadcast the pilot signal during a standby state time.

11. The wireless communication system of claim 9, wherein each of the first communication relay device and the second communication relay device is configured to:
broadcast a pilot signal of a preset signal strength.

12. The wireless communication system of claim 9, wherein
the first communication relay device is configured to:
broadcast a pilot signal having a lower signal strength than a signal strength of a signal transmitted or received during a communication process with the first radio device, and
the second communication relay device is configured to:
broadcast a pilot signal having a lower signal strength than a signal strength of a signal transmitted or received during a communication process with the second radio device.

13. The wireless communication system of claim 9, wherein
the first communication relay device and the second communication relay device are disposed in a ship.

14. The wireless communication system of claim 9, wherein the first radio device is configured to:
switch, when receiving the second pilot signal, a current communication channel, through which communication is to take place, to the second communication channel, based on the communication channel information on the second communication channel included in the received second pilot signal.

15. The wireless communication system of claim 9, wherein the second radio device is configured to:
switch, when receiving the first pilot signal, a current communication channel to the first communication channel, based on the communication channel information on the first communication channel included in the received first pilot signal.
